# EUROPEAN PATENT SPECIFICATION

(11) **EP 2 166 224 B1**
(45) Date of publication and mention of the grant of the patent: **12.09.2018**
(21) Application number: 09011887.8
(22) Date of filing: 17.09.2009
(51) Int. Cl.: F03D 7/02

(54) **A method for stopping a wind turbine in two stages**
Verfahren zum Anhalten einer Windturbine in zwei Stufen
Procédé d'arrêt d'une éolienne en deux étapes

(30) Priority: 18.09.2008 ES 200802646
(43) Date of publication of application: 24.03.2010
(73) Proprietor: Gamesa Innovation & Technology, S.L., 31621 Sarriguren (ES)
(72) Inventor: Friedrich, Michael, 8600 Silkeborg (DK); Andersen, Rasmus, 8600 Silkeborg (DK)

(56) References cited:
- DE-A1-102006 001 613
- US-A1- 2006 002 791
- US-B1- 6 265 785
- "Technical Specification of the NEG Micon NM750/48 Wind Turbine", Planet - project planning network, 25 February 1999 (1999-02-25), XP055165968, Retrieved from the Internet: URL:http://www.pcj.com/dnn/Portals/0/Docum ents/Appendix 8.PDF [retrieved on 2015-01-29]

## Description

### FIELD OF THE INVENTION

The invention relates to a method for stopping a wind turbine and more in particular to a method for stopping a wind turbine using aerodynamical and mechanical braking means.

### BACKGROUND (amendments included)

Wind turbines are devices that convert mechanical energy to electrical energy. A typical wind turbine includes a nacelle mounted on a tower housing a drive train for transmitting the rotation of a rotor to an electric generator.

The efficiency of a wind turbine depends on many factors. One of them is the orientation of the rotor blades with respect to the direction of the air stream, which is usually controlled by a pitch system that allows adjusting the pilch angle of the rotor blades for maintaining the rotor's speed at a constant value or within a given range. Otherwise, specially at high wind speeds, the load of the rotor will exceed the limits set by the wind turbine's structural strength.

There are two basic methods for controlling the power of a wind turbine changing the pitch angle of the rotor blades: the "pitch" control method and the "stall" control method. In the "pitch" control method the rotor blade's pitch angle is changed to a smaller angle of attack in order to reduce power capture and to a greater angle of attack to increase the power capture. This method allows a sensitive and stable control of the aerodynamic power capture and rotor speed.

The stopping of a wind turbine is one of the most critical operations because it may involve high loads for the wind turbine components.

In general terms, in pitch controlled wind turbines any stopping operation includes a step of pitching the blades towards the feathered position but there are known very different stopping methods such as the following.

EP 1 701 034 A2 discloses a method for stopping the rotor of a wind plant when the blade angles are in the operating position and the tower is inclined to the direction of the wind in which the blade angles of the blades of the rotor are adjusted from the operating position towards the feathered position so that at the first step, the blades angles are turned at the first blade angle speed so that the rotor brakes; at the second step, the blade angle speed is reduced so that while in the operating position, the rotor acts to soften the pendulous motion of the tower against the wind.

US 2007/0116572 A1 discloses a method for braking a wind turbine that includes selectively controlling an angle of pitch of at least one rotor blade with respect to a wind direction based on a design parameter of a component of the wind turbine to facilitate reducing a force induced into the wind turbine component as a result of braking,

US6262785 applies a method to stop a wind turbine when there is a power outage, that first uses the aerodynamic brake to slow down the wind turbine and then if there is an overspeed, uses the mechanical brake

DE102006001613 claims a wind energy installation with a rotor blade with angular adjustment, a mechanical braking device for reducing the speed of the rotor, a device to control operation and a safety system. Angular adjustment reduces the speed of the rotor at an average angular adjustment rate of less than 8.5 percent in the rotor blade after the occurrence of a trouble signal.

US200602791 describes a method for reducing peak loads of wind turbines in a changing wind environment, so that when a yaw error detected exceeds a yaw error trigger the wind turbine is shut down.

The stopping of a wind turbine may be carried out using different specific braking means that can be grouped in two categories mechanical brakes and aerodynamic brakes such as air brakes, leading edge flaps or swing tips.

In wind turbines with gearbox with three stages, mechanical brakes (typically disk brakes) are usually placed in the high speed shaft because there is a relatively low torque on it. The lower the torque the smaller will the disk brake be. In wind turbines with no gearbox or gearboxes with only two stages the torque will be higher and hence the disk brake needs to be larger.

Modern wind turbines require optimised stopping methods and the present invention is intended to attend this demand.

### SUMMARY OF THE INVENTION

An object of the invention is to provide a method for stopping a pitch controlled wind turbine that enable the reduction of the size of the mechanical brake.

This and other objects of the present invention are met by providing a method for stopping a pitch controlled wind turbine comprising a rotor with at least one blade, a mechanical brake on the high speed shaft, a pitch system for adjusting the blade pitch angle, as defined in claim 1. Thereby a stopping method is achieved that can be implemented with a mechanical brake having a limited braking torque.

Other features and advantages of the present invention will be understood from the following detailed description in relation with the enclosed drawings.

### BRIEF DESCRIPTION OF DRAWINGS

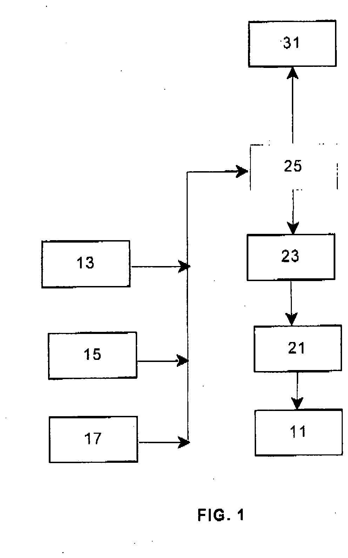

Figure 1 is a block diagram of the method of this invention.

### DETAILED DESCRIPTION OF PREFERRED EMBODIMENTS

Modern pitch controlled wind turbines use operational strategies intended to avoid as much as possible shutdowns that reduce the power production.

In any case, the administrative regulations in many jurisdictions require that wind turbines shall be provided with at least two braking systems able to control the rotor speed so that modern wind turbines are provided on the one hand with the aerodynamic braking functionalities of the pitch control means and on the other hand with specific braking means such as a mechanical disk brake placed on the high speed shaft.

Both braking systems can be used in very different manners in wind turbine stopping operations.

The stopping method according to an example, not part of the present invention which is particularly applicable for an emergency stop is carried out in two stages:
- In the first stage the blades will start feathering as soon as the stopping operation in started. Thus only an aerodynamic braking is used in this stage.
- In the second stage the blades will keep on feathering and the mechanical brake will start working once a predefined rotational speed, So, on the high speed shaft is achieved. Thus both an aerodynamic and a mechanical braking are used in this stage.

Depending on the capacity of the disk brake and said predefined rotational speed, So, of the high speed shaft, the time needed for taking the wind turbine to complete stop will differ, as well as the heat generated (that will have to be evacuated) in such an event (collaterally stress and temperatures in the disk). It is particularly important to take into account that if the temperature is too high the braking effect will decrease and then the temperature will increase even more, just like when one drives a car using the brakes all the time and not the engine for braking, so that at the end the brakes are so hot that they can not stop the car.

Once said predefined rotational speed, So, is achieved, in a typical disk brake it may take 0.1 seconds to the hydraulic group to start applying pressure and from that it may take 0.3 seconds later (0.4 seconds in overall) until the rated braking torque is achieved. In case of an electrical or pneumatic activated disk brake, the reaction times will be different.

There are two basic limitations for selecting the rotational speed, So, of the high speed shaft at which the brake will start working. These are:
- It should not be very high (i.e. above 25% of nominal rpm) because otherwise the system will be applied too long, with the corresponding increase in temperature in the disk. Besides that, due to the low capacity of the mechanical brake compared to the aerodynamic one, the whole brake event duration will not be influenced.
- It should not be very low (i.e. below 5% of nominal rpm) because, otherwise we could risk that such speed is not achieved at any time, in the sense that the idling speed is above this value.

A suitable value for So could be, for instance, 10-15% of nominal rpm.

In another example, not part of the present invention, the mechanical brake will start working once a predefined time delay To with respect to the beginning of the first stage is reached.

When stopping the turbine the blades will pitch to feathered position and the brake should be applied just before the blades reaches the feathered position, so that the turbine could be brought to a complete stop. With a pitch speed of 10 deg/sec and a pitch movement of 90 deg, the To could be 8 sec. If the pitch action to stop the turbine is performed in several pitch speed steps or variable pitch speed the stopping time could be 30-40 sec. So the disk brake should be applied after 8-35 sec depending on the method the pitch is brought to feathered position. According to the invention, the mechanical brake will start working when a predefined high speed shaft torque level TLo is reached. This torque level could be measured on the shaft or evaluated from generator power and rpm (if the generator is kept connected during stopping).

Said torque level TLo can be reached increasing the torque in the generator momentaneously or even just keeping the generator connected. In case of a permanent magnet generator the system could be short circuit to reach a braking torque. Also the power reference could be brought to above nominal power for a short period, as the electrical system will be able to cope with some extra power for a short period.

A suitable value for TLo could be 30% of nominal torque.

The stopping method according to the present invention can be implemented using the control means available in known variable speed wind turbines as shown in Figure 1.

Pitch control means involve blades 11, an actuator 23, an adjusting transmission 21 and a control device 25. The control device 25 receives input data from the generator 13, and/or another wind turbine component 15, 17 and sends output data to the actuator 23 for changing the angular position of the blades 11 according to predefined rules. The control device 25 is also connected to the disk brake 31 to be able to command its activation.

In a preferred embodiment said control device 25 is a second control device that will work failsafe in case of an emergency shut down caused by a failure in the first control device.

According to the method of this invention, when the control device 25 receives the signal corresponding to an emergency stop sends output data to the actuator 23 for changing the angular position of the blades 11 towards the feathered position. In a second stage, initiated when the control device 25 detects that the rotational speed of the high speed shaft is under a predefined value So or any of the other above-mentioned conditions sends an activation signal to the disk brake 31.

The method could be designed so that in case of failure in control device 25 the stopping operation is automatic activated

The disk brake needed for carrying out the stopping method according to the present invention does not need to be a brake capable of taking the wind turbine to standstill in any condition and consequently can be a smaller disk allowing a cost reduction. In principle this brake can be designed to work only in an emergency stop and in an stop for maintenance where the whole wind turbine shall be hoisted for a certain period of time and there is a need of a redundant system to the rotor locking system.

Although the present invention has been fully described in connection with preferred embodiments, it is evident that modifications may be introduced within the scope thereof, not considering this as limited by these embodiments, but by the contents of the following claims.

## Claims

1. A method for stopping a pitch controlled wind turbine comprising a rotor with at least one blade (11), a mechanical brake (31) on the high speed shaft, a pitch system (21, 23, 25) for adjusting the blade pitch angle, **characterized in that** it includes:
a) a first stage using the pitch system (21, 23, 25) for slowing down the rotor;
b) a second stage using both the pitch system (21, 23, 25) and the mechanical brake (31) for stopping the rotor, the second stage starts when a predefined high speed shaft torque level TLo is reached.

2. The method for stopping a pitch controlled wind turbine according to claim 1, **characterized in that** said high speed shaft torque level predefined value TLo is 30% of the nominal torque.

## Patentansprüche

1. Ein Verfahren zum Stoppen einer Pitch-gesteuerten Windenergieanlage, die einen Rotor mit mindestens einem Rotorblatt 11), einer mechanischen Bremse (31) an der Hochgeschwindigkeitswelle und einem Pitch-System (21, 23, 25) zur Einstellung des Pitch-Winkels enthält, **gekennzeichnet dadurch, dass** es Folgendes enthält:
a) eine erste Stufe, bei der das Pitch-System (21, 23, 25) zum Verlangsamen des Rotors verwendet wird;
b) eine zweite Stufe, bei der das Pitch-System (21, 23, 25) und die mechanische Bremse (31) benutzt werden, um den Rotor zu stoppen, wobei die zweite Stufe beginnt, wenn das zuvor festgelegte Drehmomentniveau TLo der Hochgeschwindigkeitswelle erreicht ist.

2. Das Verfahren zum Stoppen einer Pitch-gesteuerten Windenergieanlage gemäß Anspruch 1, **gekennzeichnet dadurch, dass** der genannte zuvor festgelegte Drehmomentniveauwert TLo der Hochgeschwindigkeitswelle 30 % des normalen Drehmoments beträgt.

## Revendications

1. Une méthode pour arrêter un aérogénérateur à commande de changement de pas comprenant un rotor avec au moins une pale (11), un frein mécanique (31) sur l'arbre rapide, un système de changement de pas (21, 23, 25) pour ajuster l'angle de pas de la pale, **caractérisée en ce qu'**elle comprend :
a) une première étape utilisant le système de changement de pas (21, 23, 25) pour ralentir le rotor ;
b) une seconde étape utilisant à la fois le système de changement de pas (21, 23, 25) et le frein mécanique (31) pour arrêter le rotor, la seconde étape commençant lorsque l'arbre rapide atteint un niveau de couple TLo prédéfini.

2. La méthode pour arrêter un aérogénérateur à commande de changement de pas selon la revendication 1 **caractérisée en ce que** ladite valeur prédéterminée TLo du niveau de couple de l'arbre rapide est égale à 30 % du couple nominal.
